# EUROPEAN PATENT SPECIFICATION

(11) **EP 3 455 492 B1**
(45) Date of publication and mention of the grant of the patent: **01.04.2020**
(21) Application number: 17723973.8
(22) Date of filing: 10.05.2017
(51) Int. Cl.: F03B 17/06, F03B 13/26

(54) **DEPLOYING SUBMERGED POWER CONNECTORS**
EINSATZ UNTERGETAUCHTER LEISTUNGSSTECKVERBINDER
DÉPLOIEMENT DE CONNECTEURS D'ALIMENTATION IMMERGÉS

(30) Priority: 10.05.2016 GB 201608150
(43) Date of publication of application: 20.03.2019
(73) Proprietor: Tidal Generation Limited, London, W6 8BJ (GB)
(72) Inventor: WARREN, Liam, Bristol Gloucestershire BS1 3AG (GB); SHEPPARD, James, Bristol Gloucestershire BR1 3AG (GB)
(74) Representative: Openshaw & Co.
(86) International application number: PCT/EP2017/061131
(87) International publication number: WO 2017/194579

(56) References cited:
- GB-A- 2 486 697
- GB-A- 2 504 516
- GB-A- 2 520 523
- US-A1- 2015 123 401
- P Weiss ET AL: "Novel wet-mate connectors for high voltage and power transmissions of ocean renewable energy systems", , 1 August 2012 (2012-08-01), XP055099712, Retrieved from the Internet: URL:http://www.icoe2012dublin.com/icoe_201 2/downloads/papers/day3/2.8 Cables and Connectors/Peter Weiss - Powersea.pdf [retrieved on 2014-01-31]

## Description

The present invention relates to deploying submerged power connectors.

### BACKGROUND OF THE INVENTION

Submerged power connectors are used in many different applications. One particular application is in the export of electrical power from water-based power generating equipment, such as water current power generating devices or wave actuated power generating devices. Such electrical power generating devices have the need to export the generated power from the location of the generator to an on shore location for distribution. As such, an export cable is provided from the generator to on shore facilities, possibly via switching and other equipment.

It is desirable that the export cable is not permanently connected to the generator and other equipment, since such a permanent connection makes maintenance difficult. As such, it has been proposed that the power generating equipment is provided with a relatively short export cable which terminates in a connector for connection with a corresponding end connector of a further cable length.

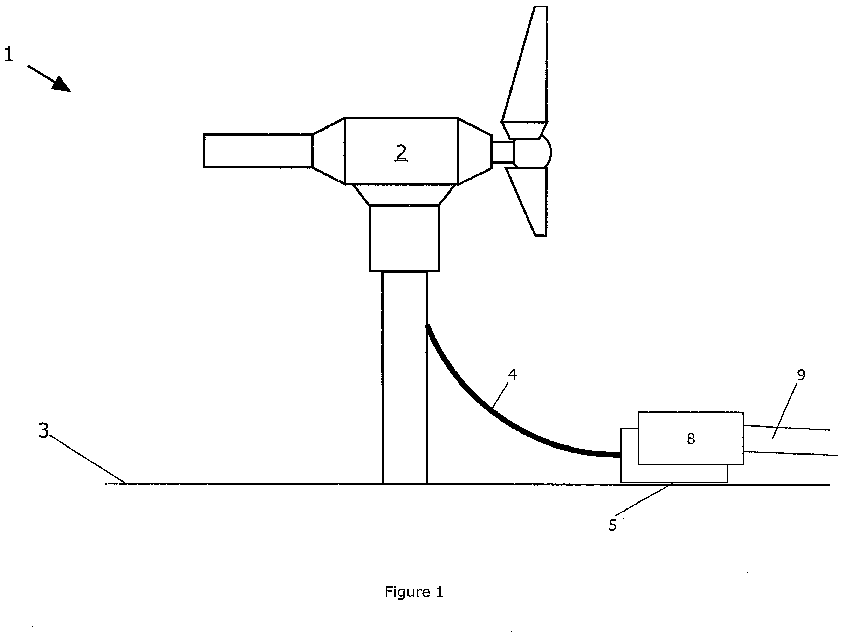

Figure 1 illustrates a particular example of a water current power generating device, which is, in this case, provided by a turbine apparatus 1. The turbine apparatus includes a generator unit 2 in which an electrical generator is located. The generator is driven by a rotor blade assembly that is caused to rotate as a water current passes the generating device. The generating device 1 is mounted on the bed 3 of a body of water, and is provided with a device power export cable 4. The device power export cable 4 is electrically connected with the generator, possibly via appropriate switch gear and/or electrical transformer equipment in the generator unit 2. The device power export cable 4 extends from the generator unit 2 to an output connector 5 located on the bed 3 adjacent the generating device 1. A transmission export cable 9 is provided to export power from the generating unit 2 to the distribution grid (not shown for clarity), and is connected to the output connector 5 of the device power export cable 4 by way of an export connector 8. The output connector 5 and export connector 8 are shown schematically and by way of example. In one example, the second termination connector 8 is lowered onto the first termination connector in order to make the appropriate connections with the aid of gravity.

Such power generating devices are deployed in extreme marine environments where weather and sea state conditions can often make marine operations difficult. The speed and simplicity of the method of deployment and retrieval of the power generating apparatus, including making the appropriate export cable connections are, therefore, important.

Generally speaking, it is considerably more difficult to deploy a submerged power generating apparatus than it is to retrieve it. The deployment requires accurate alignment and attachment of the power generating apparatus with the support structure underwater, where it is difficult to see what is happening and where accurate control of the power generating apparatus position may be difficult to achieve. Retrieval of the power generating apparatus is easier because, once detached, the power generating apparatus can be raised off the support structure quickly without the need for careful control of its alignment.

Accordingly, it is desirable to provide a method and equipment that enables the reliable and condition-tolerant deployment of export cable connections.

GB2504516 (A) discloses a sub aquatic coupling for electrical connection hub. GB2486697 (A) discloses deploying and retrieving submerged power generating equipment.

### SUMMARY OF THE INVENTION

According to a first aspect of the present invention, there is provided a method of deploying an export cable into connection with an output connector of a power generating device according to claim 1.

In one example, the winching device and export connector may be deployed from a vessel floating on the surface of the body of water.

In one example, the output connector and export connector may be brought into engagement with one another linearly.

In one example, the export connector may be aligned onto the output connector during engagement therebetween.

In one example, the output connector and export connectors may include at least one wet-mate connector.

According to another aspect of the present invention, there is provided a system for deploying an export cable into connection with an output connector of a power generating device according to claim 6.

### BRIEF DESCRIPTION OF THE DRAWINGS

Figure 1 is a schematic view of an underwater power generating device;
Figure 2 illustrates one end of a power export cable and winching device; and
Figures 3 to 9 illustrate deployment of a power export cable to a bed of a body of water in accordance with the principles of the present invention.

### DETAILED DESCRIPTION OF THE PREFERRED EMBODIMENTS

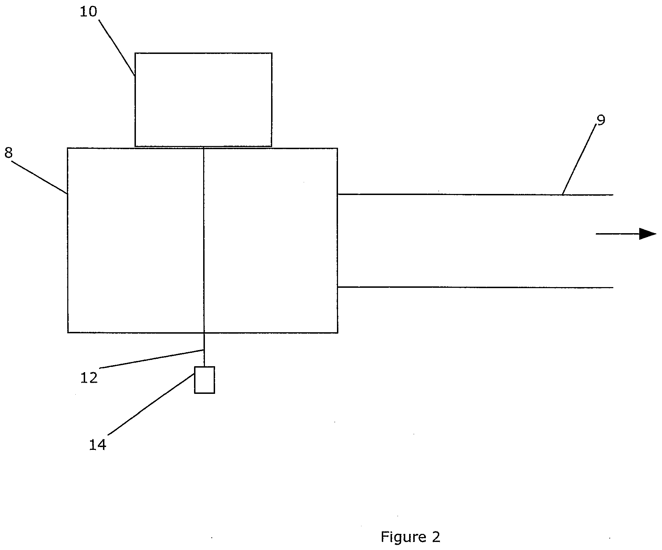

In order to provide a more reliable deployment of the export cable connector 8, in accordance with an aspect of the present invention, as shown in Figure 2, a winching device 10 is provided in releasable engagement with the export connector 8. The winching device 10 is buoyant, and is sufficiently buoyant to render the combination of the winching device 10, the connector 8 and the cable 9 buoyant. The winching device 10 has a winch tether 12 which is able to be payed out from, and retracted into, the winching device, in well-known manner. The winch tether 12 includes an engagement element 14 on its distal end. In one example, the winch tether passes through the connector 8. Alternatively, the winch tether may pass around the outside of the connector 8. As will be described below, the tether engagement element 14 is for connection with, or adjacent to, the power output connector 5 of the power generating device 1 of Figure 1.

In one example, the export connector 8 is brought into engagement with the output connector 5 in a linear fashion. That is the connectors include connection portions that engage linearly. The output connector 5 and the export connector 8 include one or more so-called "wet-mate" connectors that are able to be connected underwater without compromising the electrical, and other, connections therebetween.

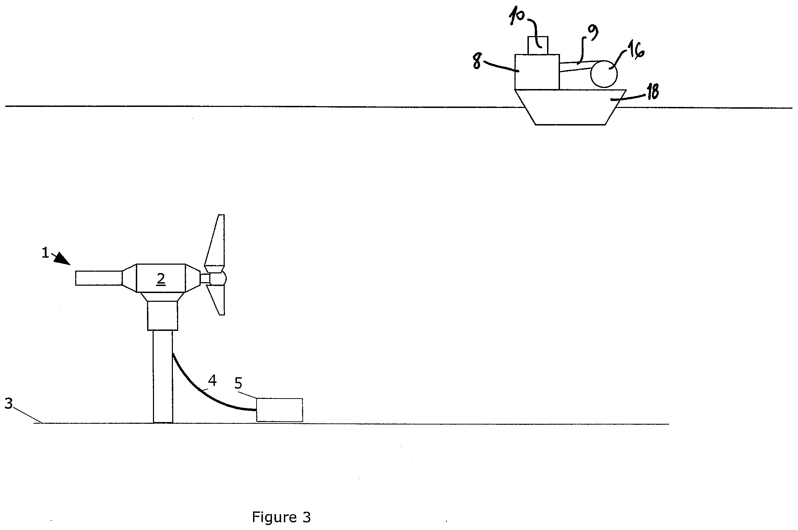

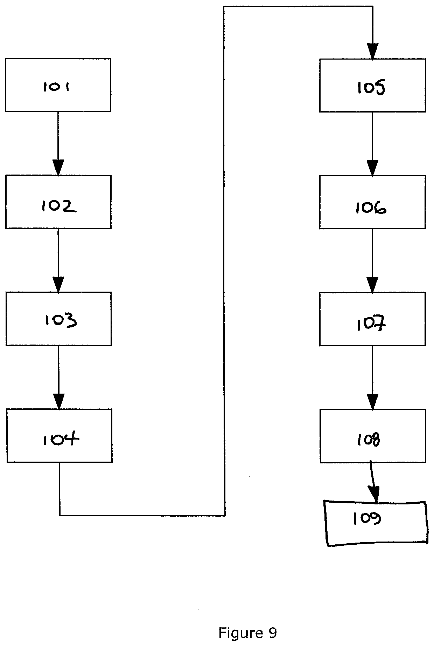

Deployment of the export cable 9, and connection of the export connector 8 with output connector 5, will now be described with reference to Figures 3 to 9, in which Figures 3 to 8 illustrates various stages in the method set out in the flowchart of Figure 9. It will be readily appreciated that Figures 3 to 8 are not to scale.

As shown in Figure 3, a vessel 18 carries (step 101) the export cable 9 (provided on a cable drum 16), together with the export connector 8 attached to one end of the export cable 9 (step 102). The connector 8 may be attached before the cable 9 is loaded onto the vessel 18, or may be attached whilst on board. The winching device 10 is engaged (step 103) with the connector 8, and the vessel 18 proceeds to the location of the power generating device 1.

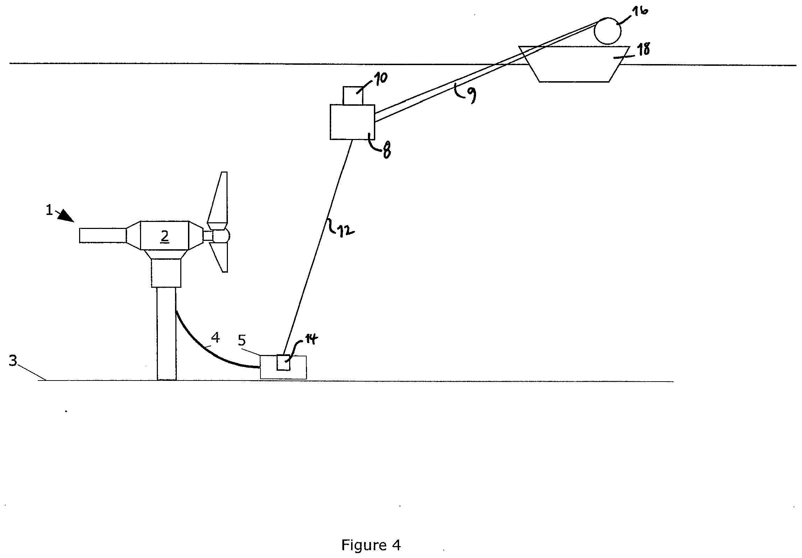

As shown in Figure 4, the export connector 8, with the winching device 10 is deployed (step 104) into the body of water from the vessel 18. The export cable 9 is wound out from the cable drum 16. The winch tether 12 is payed out from the winching device 10 and the engagement element 14 is carried to the output connector 5 by a remotely operated vehicle (ROV, not shown). The engagement element is engaged with, or adjacent to, the output connector 5 (step 105).

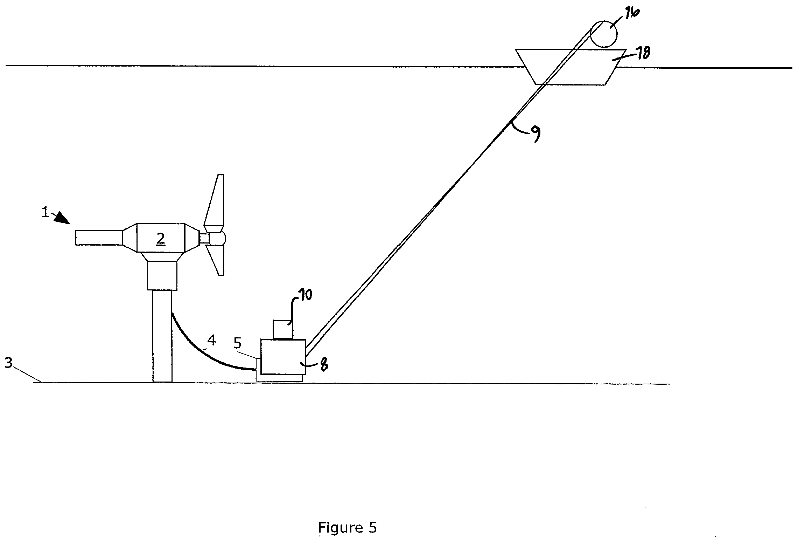

The winching device 10 then winches in the winch tether 12 (step 106), thereby pulling the winching device 10, and the connector 8, down through the body of water. The winch tether is wound into the winching device 10 until the export connector 8 is brought into engagement with the output connector 5. The export cable 9 is wound out from the cable drum 16, and extends from the vessel to the connection between the output connector 5 and the export connector 8. Figure 5 illustrates the position when the export connector 8 is engaged with the output connector 5.

The export connector 8 and output connector 8 engage linearly as the export connector is brought into the vicinity of the output connector 5. In one example, the output connector 5 and the export connector 8 have inter-engaging features of shape that cause the export connector to align correctly with the output connector.

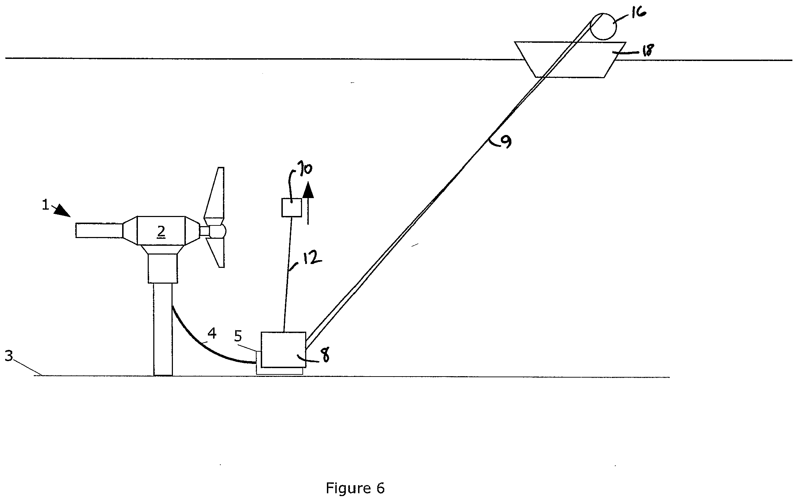

The winching device 10 is then disengaged from the export connector 8 (step 107) and the winch tether 12 is payed out (step 108), so that the winching device 10 is able to rise through the body of water to the surface, by virtue of being buoyant. The speed at which the winch tether 12 is extended determines the speed at which the winching device 10 moves through the body of water. Figure 6 illustrates the winching device 10 moving upwards through the body of water.

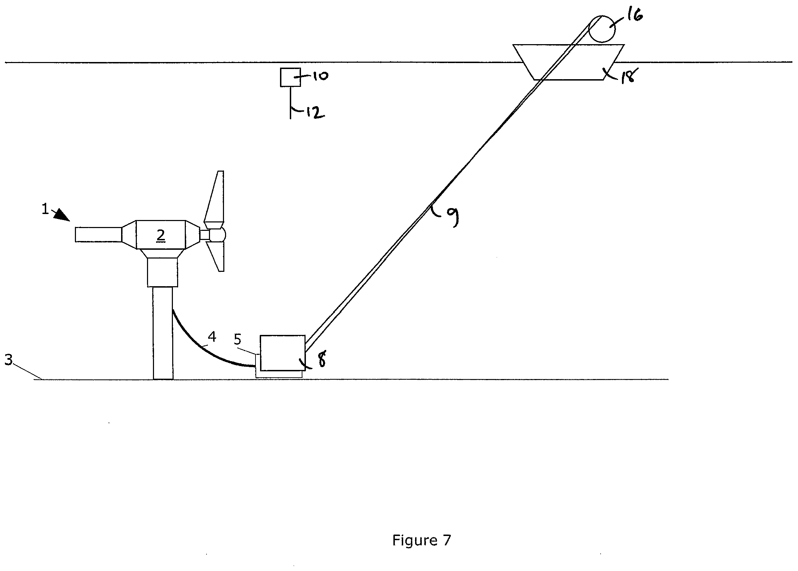

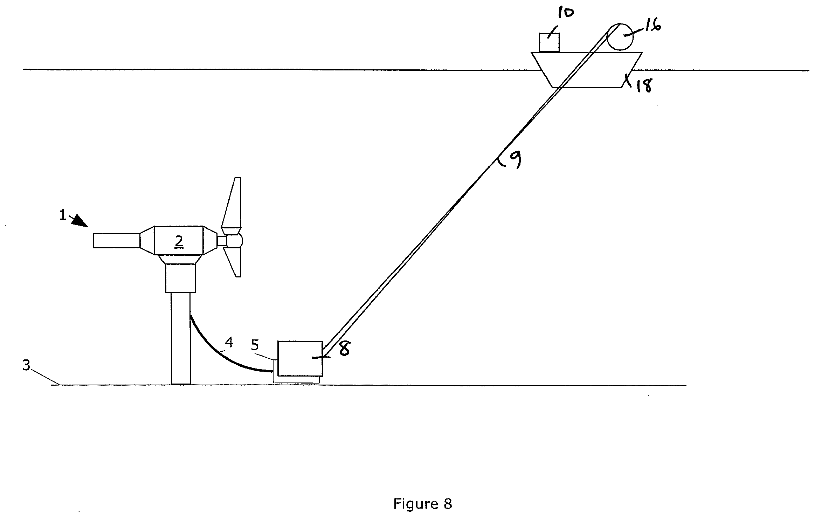

As shown in Figure 7, once the winching device 10 reaches the surface of the body of water, the winch tether 12 is disengaged from the output connector 5, and is withdrawn into the winch, thereby recovering the winch tether 12. The engagement element 14 may be recovered with the winch tether 12, or may be left in place on the output connector 5. The winching device 10, with the winch tether 12, is then recovered (step 109) on to the vessel 18, or on to another vessel, as illustrated in Figure 8.

In such a manner, the output connector 8 can be reliably delivered into connection with the output connection 5 in a suitably short amount of time, and with the desired accuracy. This is achieved by the winching down of the connector using the buoyant winching device 10. This winching down brings the export connector 8 directly into engagement with the output connector 5 by virtue of the placement of the engagement element 14 of the winch tether 12.

The aforementioned is not intended to be limiting with respect to the scope of the appended claims. Various substitutions, alterations, and modifications may be made to the invention without departing from the scope of the invention as defined by the claims.

## Claims

1. A method of deploying an export cable (9) into connection with an output connector (5) of a power generating device, the output connector (5) being mounted on a bed of a body of water, the method comprising:
providing a power export cable (9);
providing an export connector (8) on an end of the export cable (9);
providing a buoyant winching device (10) in engagement with the connector, the winching device (10) being sufficiently buoyant to render a combination of the export connector (8) and the winching device (10) buoyant;
deploying the winching device (10) and export connector (8) into the body of water;
attaching a distal end of a winch tether (12) of the winching device (10) adjacent or to the output connector (5) of the power generating device;
winching in the winch tether (12) using the winching device (10) whilst paying out the export cable (9), thereby causing the export connector (8) and attached export cable (9) to move towards the output connector (5), until the export connector (8) is brought into engagement with the output connector (5);
disengaging the winching device (10) from the export connector (8);
paying out the winch tether (12), thereby allowing the winching device (10) to rise through the body of water;
disconnecting the winch tether (12);
winching in the winch tether (12) into the winching device (10) to recover the tether and recovering the winch tether (12); and
recovering the winching device (10).

2. A method as claimed in claim 1, wherein the winching device (10) and export connector (8) are deployed from a vessel floating on the surface of the body of water.

3. A method as claimed in claim 1 or 2, wherein the output connector (5) and export connector (8) are brought into engagement with one another linearly.

4. A method as claimed in any one of the preceding claims, wherein the export connector (8) is aligned onto the output connector (5) during engagement therebetween.

5. A method as claimed in any one of the preceding claims, wherein the output connector (5) and export connectors (8) include at least one wet-mate connector.

6. A system for deploying an export cable (9) into connection with an output connector (5) of a power generating device, the output connector (5) being mounted on a bed of a body of water, and the export cable (9) including an export connector (8) at a distal end thereof for connection with such an output connector (5), the system comprising a buoyant winching device (10), releasably engageable with an export connector (8) of an export cable (9), and including a winch tether (12) having an engagement element adapted for engagement with an output connector (5) of a power generating device, wherein the system is operable in accordance with a method as claimed in any one of the preceding claims.

## Patentansprüche

1. Verfahren zum Einsetzen eines Exportkabels (9) in Verbindung mit einem Ausgangsverbinder (5) einer Stromerzeugungsvorrichtung, wobei der Ausgangsverbinder (5) auf einem Boden eines Gewässers gelagert ist, wobei das Verfahren Folgendes umfasst:
Bereitstellen eines Stromexportkabels (9);
Bereitstellen eines Exportverbinders (8) an einem Ende des Exportkabels (9);
Bereitstellen einer mit dem Verbinder in Eingriff stehenden schwimmfähigen Windenvorrichtung (10), wobei die Windenvorrichtung (10) ausreichend schwimmfähig ist, um eine Kombination des Exportverbinders (8) und der Windenvorrichtung (10) schwimmfähig zu machen;
Einsetzen der Windenvorrichtung (10) und des Exportverbinders (8) in das Gewässer;
Anbringen eines distalen Endes einer Windenleine (12) der Windenvorrichtung (10) neben oder an dem Ausgangsverbinder (5) der Stromerzeugungsvorrichtung;
Aufwickeln der Windenleine (12) unter Verwendung der Windenvorrichtung (10) während des Abwickelns des Exportkabels (9), wodurch sich der Exportverbinder (8) und das daran befestigte Exportkabel (9) in Richtung des Ausgangsverbinders (5) bewegen, bis der Exportverbinder (8) mit dem Ausgangsverbinder (5) in Eingriff gebracht worden ist;
Lösen der Windenvorrichtung (10) von dem Exportverbinder (8);
Abwickeln der Windenleine (12), wodurch die Windenvorrichtung (10) durch den Wasserkörper aufsteigen kann;
Lösen der Windenleine (12);
Aufwickeln der Windenleine (12) in die Windenvorrichtung (10), um die Leine zurückzuholen und die Windenleine (12) zurückzuholen; und
Zurückholen der Windenvorrichtung (10).

2. Verfahren nach Anspruch 1, wobei die Windenvorrichtung (10) und der Exportverbinder (8) von einem auf der Oberfläche des Gewässers schwimmenden Schiff aus eingesetzt werden.

3. Verfahren nach Anspruch 1 oder 2, wobei der Ausgangsverbinder (5) und der Exportverbinder (8) linear miteinander in Eingriff gebracht werden.

4. Verfahren nach einem der vorhergehenden Ansprüche, wobei der Exportverbinder (8) auf den Ausgangsverbinder (5) ausgerichtet ist, während sie in gegenseitigem Eingriff stehen.

5. Verfahren nach einem der vorhergehenden Ansprüche, wobei der Ausgangsverbinder (5) und der Exportverbinder (8) mindestens einen Wet-Mate-Verbinder einschließen.

6. System zum Einsetzen eines Exportkabels (9) in Verbindung mit einem Ausgangsverbinder (5) einer Stromerzeugungsvorrichtung, wobei der Ausgangsverbinder (5) auf dem Boden eines Wasserkörpers gelagert ist, und das Exportkabel (9) an seinem distalen Ende einen Exportverbinder (8) zur Verbindung mit einem solchen Ausgangsverbinder (5) aufweist, wobei das System eine schwimmfähige Windenvorrichtung (10) umfasst, die lösbar mit einem Exportverbinder (8) eines Exportkabels (9) in Eingriff gebracht werden kann, und eine Windenleine (12) einschließt, die ein Eingriffselement aufweist, das zum Eingriff mit einem Ausgangsverbinder (5) einer Stromerzeugungsvorrichtung ausgelegt ist, wobei das System nach einem Verfahren nach einem der vorhergehenden Ansprüche betreibbar ist.

## Revendications

1. Procédé de déploiement d'un câble d'exportation (9) en connexion avec un connecteur de sortie (5) d'un dispositif générateur d'énergie, le connecteur de sortie (5) étant monté sur un lit d'un plan d'eau, le procédé consistant à :
fournir un câble d'exportation d'énergie (9) ;
fournir un connecteur d'exportation (8) à une extrémité du câble d'exportation (9) ;
fournir un dispositif de treuil (10) flottant en prise avec le connecteur, le dispositif de treuil (10) étant suffisamment flottant pour rendre flottante une combinaison du connecteur d'exportation (8) et du dispositif de treuil (10) ;
déployer le dispositif de treuil (10) et le connecteur d'exportation (8) dans le plan d'eau ;
fixer une extrémité distale d'un câble de treuil (12) du dispositif de treuil (10) de manière adjacente ou au connecteur de sortie (5) du dispositif générateur d'énergie ;
treuiller le câble de treuil (12) à l'aide du dispositif de treuil (10) tout en déroulant le câble d'exportation (9), entraînant ainsi le connecteur d'exportation (8) et le câble d'exportation (9) fixé vers le connecteur de sortie (5), jusqu'à ce que le connecteur d'exportation (8) soit mis en prise avec le connecteur de sortie (5) ;
dégager le dispositif de treuil (10) du connecteur d'exportation (8) ;
dérouler le câble de treuil (12), permettant ainsi au dispositif de treuil (10) de s'élever à travers le plan d'eau ;
déconnecter le câble de treuil (12) ;
treuiller le câble de treuil (12) dans le dispositif de treuil (10) de façon à récupérer le câble et à récupérer le câble de treuil (12) ; et à
récupérer le dispositif de treuil (10).

2. Procédé selon la revendication 1, dans lequel le dispositif de treuil (10) et le connecteur d'exportation (8) sont déployés à partir d'un navire flottant à la surface du plan d'eau.

3. Procédé selon la revendication 1 ou 2, dans lequel le connecteur de sortie (5) et le connecteur d'exportation (8) sont mis en prise l'un avec l'autre de manière linéaire.

4. Procédé selon l'une quelconque des revendications précédentes, dans lequel le connecteur d'exportation (8) est aligné sur le connecteur de sortie (5) pendant leur mise en prise.

5. Procédé selon l'une quelconque des revendications précédentes, dans lequel le connecteur de sortie (5) et le connecteur d'exportation (8) comprennent au moins un connecteur d'accouplement humide.

6. Système de déploiement d'un câble d'exportation (9) en connexion avec un connecteur de sortie (5) d'un dispositif générateur d'énergie, le connecteur de sortie (5) étant monté sur un lit d'un plan d'eau, et le câble d'exportation (9) comprenant un connecteur d'exportation (8) au niveau d'une extrémité distale de celui-ci pour la connexion avec un tel connecteur de sortie (5), le système comprenant un dispositif de treuil (10) flottant pouvant être mis en prise de manière amovible avec un connecteur d'exportation (8) d'un câble d'exportation (9), et comprenant un câble de treuil (12) comportant un élément de mise en prise conçu pour une mise en prise avec un connecteur de sortie (5) d'un dispositif générateur d'énergie, le système pouvant fonctionner conformément à un procédé selon l'une quelconque des revendications précédentes.
